(19) Europäisches Patentamt
European Patent Office
Office européen des brevets

(11) Veröffentlichungsnummer: **0 024 654**
**A1**

# (12) EUROPÄISCHE PATENTANMELDUNG

(21) Anmeldenummer: 80104842.2

(22) Anmeldetag: 14.08.80

(51) Int. Cl.³: C 09 B 67/24
C 09 B 67/42

(30) Priorität: 22.08.79 CH 7653/79

(43) Veröffentlichungstag der Anmeldung:
11.03.81 Patentblatt 81/10

(84) Benannte Vertragsstaaten:
CH DE FR GB LI NL

(71) Anmelder: CIBA-GEIGY AG
Patentabteilung Postfach
CH-4002 Basel(CH)

(72) Erfinder: Bruttel, Beat, Dr.
Ob den Reben 5
CH-4461 Böckten(CH)

(72) Erfinder: Preiswerk, Werner
Blütenweg 14
CH-4102 Binningen(CH)

(74) Vertreter: Berg, Wilhelm, Dr. et al,
Mauerkircher Strasse 45
D-8000 München 80(DE)

## (54) Granulate von faserreaktiven Farbstoffen und Verfahren zu ihrer Herstellung.

(57) Verfahren zur Herstellung von Granulaten von wasserlöslichen faserreaktiven Farbstoffen, die als Reaktivrest mindestens eine heterocyclische Gruppe besitzen, welche mindestens ein abspaltbares Halogenatom aufweist, zusammen mit einem Tensid und gegebenenfalls weiteren Zusätzen mittels Wirbelschichtgranulierung.

Bevorzugte weitere Zusätze sind nichtionogene Tenside, hydrotropische Mittel, Dextrin, Staubbindemittel und anorganische und/oder organische Salze. Die erhaltenen Granulate weisen eine verbesserte mechanische Stabilität, geringere Staubbildung und eine wesentlich höheres Schüttgewicht gegenüber den überlicherweise hergestellten Pulvern bzw. Zerstäubungsgranulatformen bei gleichzeitiger guter Benetzbarkeit und Löslichkeit in Wasser auf.

EP 0 024 654 A1

0024654

Anwaltsakte 50 105

CIBA-GEIGY AG
Basel (Schweiz)

1-12486/+

# Granulate von faserreaktiven Farbstoffen und Verfahren zu ihrer Herstellung

Die Erfindung betrifft ein Verfahren zur Herstellung von Granulaten spezifischer faserreaktiver Farbstoffe in einem Wirbelbett sowie, als industrielles Erzeugnis, die gemäss dem Verfahren erhaltenen Granulate.

In der DE-OS 27 16 478 ist das Granulieren von wasserlöslichen, Farbstoffen aus einem wässrigen Slurry gegebenenfalls in Gegenwart von Siedesalz in einem Wirbelbett beschrieben.

Es wurde nun gefunden, dass beim Zusetzen von Tensiden und gegebenenfalls weiteren Zusätzen zum Slurry und/oder ins Wirbelbett, man überraschenderweise spezifische Reaktivfarbstoffe gemäss vorliegender Erfindung im Wirbelbett granulieren kann, wobei man Granulate erhält, die eine verbesserte mechanische Stabilität, geringere Staubbildung und ein wesentlich höheres Schüttgewicht gegenüber den üblicherweise hergestellten Pulvernbzw. Zerstäubungsgranulatformen bei gleichzeitiger guter Benetzbarkeit und Löslichkeit im Wasser aufweisen.

Die Erfindung betrifft somit ein Verfahren zur Herstellung von Granulaten von faserreaktiven Farbstoffen, indem man eine wässrige Zubereitung, enthaltend

A) mindestens einen, eine wasserlöslichmachende Gruppe enthaltenden, faserreaktiven Farbstoff, der als Reaktivrest mindestens eine heterocyclische Gruppe besitzt, die mindestens ein abspaltbares Halogenatom aufweist,

B) mindestens ein Tensid und gegebenenfalls weitere Zusätze auf ein Wirbelbett, enthaltend mindestens eine der Komponenten A, B oder der weiteren Zusätze sprüht.

Als weitere Zusätze verwendet man z.B. mindestens ein Hilfsmittel mit verstärkter Hydrotropiewirkung, Dextrin, Staubbindemittel, anorganisches und/oder organisches Salz.

Gegenstand der Erfindung sind ferner die nach dem erfindungsgemässen Verfahren erhaltenen Farbstoffgranulate.

Geeignete Tenside sind nichtionogener Natur oder vorzugsweise anionischer Natur. Es können aber auch Gemische von nichtionogenen und anionischen Tensiden eingesetzt werden.

Als anionische Tenside sind Kondensationsprodukte aromatischer Sulfonsäuren mit Formaldehyd wie Kondensationsprodukte aus Formaldehyd und Naphthalinsulfonsäuren, aus Formaldehyd, Naphthalinsulfonsäure und Benzolsulfonsäure, oder aus Rohkresol, Formaldehyd und Naphthalinsulfonsäure, sowie vor allem Kondensationsprodukte aus Phenol-, Kresol- oder Naphthol- sulfonsäure und Formaldehyd, oder Ligninsulfonate (Sulfit-Celluloseablauge) oder Oxyligninsulfonate, und insbesondere Kondensationsprodukte aus Naphthalinsulfonsäure und Formaldehyd.

Als nichtionogene Tenside kommen vor allem in Betracht:

Polyäthylenglykole mit einem Molekulargewicht von vorzugsweise 200 bis 1000;

Mischpolymerisate aus Aethylenoxid und Propylenoxid (sog. Blockpolymerisate);

Umsetzungsprodukte aus Fettsäuren mit 8 bis 22 Kohlenstoffatomen und Aminen oder Hydroxyalkylaminen, wie z.B. Kokosfettsäureamid, Oelsäurediäthanolamid oder Kokosfettsäureäthanolamid;

Fettalkoholpolyglykoläther, besonders solche mit mehr als 20 Mol Aethylenoxid, wie Cetyl- oder Stearylalkohol veräthert mit 25 Mol Aethylenoxid, Stearyl- oder Oleylalkohol veräthert mit 80 Mol Aethylenoxid und Oleylalkohol veräthert mit 20 bis 80 Mol Aethylenoxid, sowie Alkylphenoläther, wie p-Nonylphenol veräthert mit 9 Mol Aethylenoxid, Ricinolsäureester mit 15 Mol Aethylenoxid und Hydroabietylalkohol veräthert mit 25 Mol Aethylenoxid.

Besonders vorteilhaft haben sich Anlagerungsprodukte erwiesen, aus z.B. 5 bis 50 Mol, vorzugsweise 10 bis 30 Mol Alkylenoxiden, insbesondere von Aethylenoxid, wobei einzelne Aethylenoxideinheiten durch substituierte Epoxide, wie Styroloxid und/oder Propylenoxid, ersetzt sein können, angelagert an höhere Fettsäuren oder an gesättigte oder ungesättigte Alkhohole, Mercaptane oder Amine mit 8 bis 20 Kohlenstoffatomen oder an Alkylphenole oder Alkylthiophenole, deren Alkylreste mindestens 7 Kohlenstoffatome aufweisen, beispielsweise Kondensationsprodukte aus Fettsäuren (z.B. Oelsäure oder Ricinolsäure), oder aliphatischen Alkoholen (z.B. Octanol oder Decylalkohol), oder gegebenenfalls substituierten Phenolen (z.B. Alkylphenol, wie Nonylphenol) mit Aethylenoxid, vorzugsweise Kondensationsprodukte aus einer aliphatischen Fettsäure und 10 bis 30 Mol Aethylenoxid, insbesondere aus Oelsäure und 20 Mol Aethylenoxid.

Als erfindungsgemäss verwendbare Hilfsmittel mit verstärkter Hydrotropiewirkung sind ausser Harnstoff die in der DE-OS 28 02 327 beschriebenen Hilfsmittelmischungen zu nennen.

Als Staubbindemittel kommen die üblichen in Frage wie z.B. Paraffinöl und Mineralöle, gegebenenfalls emulgiert mit geeigneten Emulgatoren z.B. Fettsäure(-alkohol)-Aethylenoxidaddukten, insbesondere ein Gemisch aus Mineralöl bzw. Mineralölsulfonsäure und einem Emulgator oder aus Paraffinöl und einem nichtionischen Emulgator.

Als anorganische Salze sind z.B. erwähnt: Natriumchlorid,

Ammoniumsulfat, Natriumsulfat, Natriumhydrogensulfat, Natriumcarbonat, Natriumhydrogencarbonat, Mono-, Di- oder Trinatriumphosphat, Natriumtripolyphosphat, Polyphosphate und Lithiumchlorid, sowie als organisches Salz Natriumacetat.

Die erfindungsgemäss zu granulierendenfaserreaktiven Farbstoffe können verschiedenen Farbstoffklassen angehören. Es handelt sich um wasserlösliche vorzugsweise sulfogruppenhaltige Mono-, Dis- oder Polyazofarbstoffe, Pyrazolon-, Thioxanthon-, Oxazin-, Stilben-, Formazan-, Anthrachinon-, Nitro-, Methin-, Styryl-, Azastyryl-, Triphenylmethan- oder Phthalocyaninfarbstoffe, vor allem um Farbstoffe der Azo-, Anthrachinon- und Phthalocyaninreihe, die mindestens eine definitionsgemässe faserreaktive Gruppe enthalten, welche mit dem zu färbenden Fasermaterial eine kovalente Bindung einzugehen vermag.

Beispielsweise handelt es sich um die folgenden Reaktivgruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, 2,3-Dichlorchinoxalin-6-carbonyl- oder 2-Chlorbenzthiazolylgruppen.

Vor allem aber handelt es sich um Monochlor-, Monofluor- oder Dichlor- oder Difluortriazinyl-, Di- oder Trichlorpyrimidinyl- und Difluorchlorpyrimidinylgruppen. Die erfindungsgemäss zu granulierenden Reaktivfarbstoffe können metallhaltig oder metallfrei sein, wobei letzterebevorzugt sind. Sie sind bekannt und können nach bekannten Methoden hergestellt werden.

Die erfindungsgemäss erhaltenen Granulate enthalten neben dem Reaktivfarbstoff total 3 bis 50 Gew. % der Komponenten B und der weiteren Zusätze und 1 bis 15 Gew.% Restfeuchte, und insbesondere
1 bis 30 Gew.% anionisches Tensid und gegebenenfalls
1 bis 45 Gew. % eines oder mehrerer weiteren Zusätze, sowie

1 bis 15 Gew.% Restfeuchte,
wobei die Prozentsätze jeweils auf das Gesamtgewicht der Granulate bezogen sind.

Der Farbstoffgehalt der Granulate kann zwischen 40 und 95 Gewichtsprozent, bezogen auf das gesamte Granulat schwanken.

Demnach enthalten die erfindungsgemässen Granulate 40 bis 95 Gew. %, vorzugsweise 65 bis 95 Gew.% mindestens eines, eine wasserlöslichmachende Gruppe enthaltenden, faserreaktiven Farbstoffes, der als Reaktivrest mindestens eine heterocyclische Gruppe besitzt, die mindestens ein abspaltbares Halogenatom aufweist; 1 bis 30 Gew.% eines anionischen Tensides und gegebenenfalls 1 bis 45 Gew.% weitere Zusätze sowie Restfeuchte.

Vorzugsweise enthalten die erfindungsgemässen Granulate:

65 bis 95 Gew.% mindestens eines eine heterocyclische Gruppe mit mindestens einem abspaltbaren Halogenatom aufweisenden Reaktivfarbstoffes,
1 bis 30 Gew.% anionisches Tensid, und
1 bis 15 Gew.% Restfeuchte, sowie gegebenenfalls
1 bis 15 Gew.% nichtionisches Tensid und/oder Hilfsmittel mit verstärkter Hydrotropiewirkung
1 bis 5 Gew.% eines Staubbindemittels und/oder
1 bis 15 Gew.% anorganisches Salz.

Die erfindungsgemässen Granulate enthalten vorteilhaft 65 bis 95 Gew.% des Farbstoffs der Formel I

$$D - Z_n \qquad (I)$$

worin D den Rest eines metallfreien oder metallhaltigen Azo-, Anthrachinon- oder Phthalcyaninfarbstoffes, der eine oder mehrere wasserlöslichmachende Gruppen aufweist, Z eine Diazinyl- bzw. Triazinylgruppe, die mindestens ein abspaltbares Halogenatom aufweist und über eine Aminogruppe an D gebunden ist, und
n 1 oder 2 bedeuten;
5 bis 20 Gew.% eines Naphthalinsulfonsäure/Formaldehyd-Kondensationsproduktes, eines Ligninsulfonates oder eines Oxyligninsulfonates;
2 bis 10 Gew. % Restfeuchte; und gegebenenfalls
1 bis 15 Gew. % eines Kondensationsproduktes aus Oelsäure und 20 Mol Aethylenoxid oder einer Hilfsmittelmischung mit verstärkter Hydrotropiewirkung, 1 bis 5 Gew. % eines Gemisches aus einem Mineralöl und einem Emulgator; und/oder 1 bis 15 Gew. % anorganisches Salz.

Besonders bevorzugte Granulate sind solche die Farbstoffe der Formel Ia enthalten:

$$D - Z'_n \qquad (Ia)$$

worin D die unter Formel I angegebene Bedeutung hat, Z' eine Gruppe der Formel

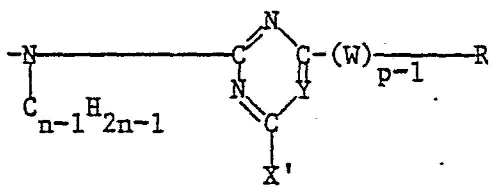

bedeutet, worin

W 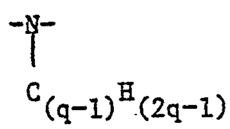

X' Halogen, vorzugsweise Cl oder F,

Y =N-, =CH- oder =CX'-,

n 1 oder 2, vorzugsweise 1,

p 1 oder 2, und

q 1 bis 3 darstellen,

wobei wenn p 2 ist, R gegebenenfalls substituiertes Niederalkyl, Phenyl oder Naphthyl ist, und wenn p 1 ist, R Halogen, Niederalkoxy oder Alkoxyalkoxy, gegebenenfalls substituiertes Phenoxy oder $-NH_2$ sein kann.

Die erfindungsgemässen Granulate werden vorzugsweise kontinuierlich in einer Wirbelschicht-Anlage, wie sie beispielsweise aus der DE-OS 2 231 445 bekannt ist, hergestellt, indem man in ein Wirbelbett kontinuierlich oder absatzweise die definitionsgemässe Zubereitung in Form einer Lösung, Suspension oder eines Gemisches einer Lösung und Suspension, enthaltend den spezifischen faserreaktiven Farbstoff zusammen mit den genannten Zusätzen, einsprüht, und unter Aufrechterhaltung des Wirbelbettes aus diesem kontinuierlich oder absatzweise körniges Material entnimmt. Das so entnommene Material wird dann vorzugsweise gesichtet, indem die Grobanteile mit einem Durchmesser grösser als 5 mm, gegebenenfalls nach Zerkleinerung sowie die Feinanteile mit einem Durchmesser kleiner als 0,1 mm wieder in die wässrige Zubereitung und/oder in das Wirbelbett kontinuierlich oder absatzweise zurückgeführt werden. Die Teilchen mit einer Grösse zwischen 0,1 und 2 mm stellen den bevorzugten Anteil der erfindungsgemässen Präparate dar und sind zur Verwendung als Farbstoffpräparate besonders geeignet. Zur Bereitung der wässrigen Ausgangs-Zubereitung kann man die Synthese-Lösung bzw. -Suspension oder den aus der Farbstoffherstellung erhaltenen Presskuchen direkt mit den Zusätzen mischen und homogenisieren und anschliessend in das Wirbelbett sprühen. Gleichzeitig kann man mit der wässrigen Farbstoffzubereitung pulverförmige Zusätze in das Wirbelbett sprühen.

Man kann aber auch das Rohfarbstoff-Pulver und das Wasser, gegebenenfalls zusammen mit flüssigen Zusätzen, getrennt in das Wirbelbett geben.

Das Verfahren eignet sich auch für zerstäubungsgetrocknete Pulver,da damit eine Verbesserung des Lösungsverhaltens (Benetzung, Löslichkeit), der Rieselfähigkeit und vor allem des Staubverhaltens und des Schüttgewichts gegenüber der zerstäubungsgetrockneten Ware erreicht wird.

In einer bevorzugten Ausführungsform wird eine wässrige Suspension bzw. Lösung, enthaltend einen definitionsgemässen Reaktivfarbstoff, Wasser und die definitionsgemässen Zusätze auf ein Wirbelbett, bestehend aus dem Endprodukt (Granulat) aufgedüst. Der Prozess kann gleichermassen ablaufen durch kontinuierliche Zuführung der besagten Suspension bzw. Lösung oder der trockenen Pulverform unter Zudüsung von Wasser enthaltend die Zusätze. Das entstehende Granulat wird aus dem Wirbelbett unter anschliessender Trennung von Grob- und Feinanteil, kontinuierlich abgezogen, wobei der Feinanteil und der Grobanteil, gegebenenfalls nach Zerkleinerung in die Suspension bzw. vorzugsweise in das Wirbelbett zurückgeführt wird.

Das Wirbelbett wird durch einen Gasstrom erzeugt, der vorzugsweise eine Eingangstemperatur von 35 bis 300° C aufweist, wobei die Temperatur im Wirbelbett vorteilhaft 50 bis 100° C beträgt.

Die Wirbelbett-Druckdifferenz ($\Delta p$) beträgt dabei vorzugsweise 50 bis 150 mm Wassersäule (WS) und die Strömungsgeschwindigkeit 0,5 bis 3 m/sec.

Die Wirbelbett-Temperaturdifferenz ($\Delta T$) liegt normalerweise im Bereich von 5 bis 15° C. Die Leistung kann je nach Apparatur und Produkt entsprechend angepasst werden. Vorteilhaft wird eine Apparatur mit 2,5 $m^2$ Siebbodenfläche verwendet, die mit einer Leistung von 100 bis 900 Liter pro Stunde flüssigen Zubereitung gefahren wird. Die angegebene Leistung wird durch Zugabe von entsprechenden Mengen pulverförmigen Ausgangsprodukt, bzw. gemäss den verschiedenen Möglichkeiten der Zuspeisung nach folgendem Flussdiagramm ebenfalls erreicht.

Man erhält nach diesem Verfahren staubarme bis staubfreie Granulate von einer Korngrösse zwischen 50 und 5000 µm, vor allem zwischen 100 und 2000 µm, die sich auszeichnen durch eine einheitliche formstabile Korngrösse und relativ hohes Schüttgewicht, durch eine hohe mechanische Festigkeit, durch ihre Rieselfähigkeit und durch ihr gutes Löseverhalten, wie Benetzung und Dispergierbarkeit. Insbesondere bilden sie beim Transport und bei der Verarbeitung keinen Staub. Diese Eigenschaft behalten sie auch beim Lagern über mehrere Monate, z.B. 6 bis 12 Monate, bei einer Temperatur von -10° C bis +50° C.

Das folgende Flussdiagramm gibt einen einfachen Ueberblick über die verschiedenen Ausführungsformen des erfindungsgemässen Verfahrens.

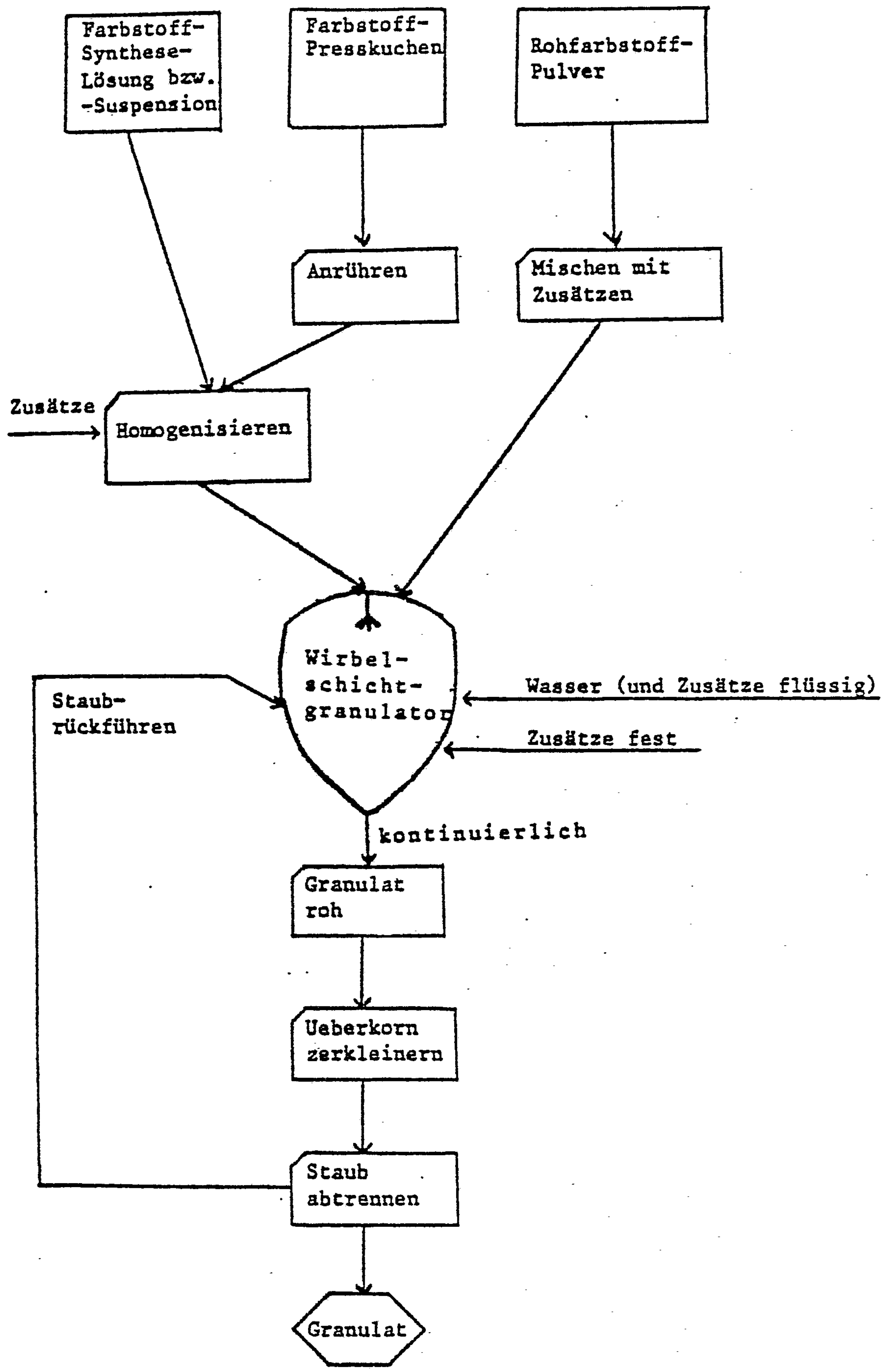
Farbstoff-
Synthese-
Lösung bzw.
-Suspension
Farbstoff-
Presskuchen
Rohfarbstoff-
Pulver
Anrühren
Mischen mit
Zusätzen
Zusätze
Homogenisieren
Wirbel-
schicht-
granulator
Wasser (und Zusätze flüssig)
Zusätze fest
Staub-
rückführen
kontinuierlich
Granulat
roh
Ueberkorn
zerkleinern
Staub
abtrennen
Granulat

In den nachfolgenden Beispielen, welche die Erfindung erläutern, bedeuten Teile Gewichtsteile. Die Temperaturen sind in Grad Celsius angegeben. WS bedeutet Wassersäule. Die Farbstoffe liegen als Alkalisalz, vor allem als Natriumsalz vor. Die Bezeichnung staubarm bei den Präparaten bedeutet, dass praktisch keine Teilchen mit einer Grösse unter 50 µm vorhanden sind.

In der Praxis kann man zur Bestimmung des Staubverhaltens folgenden Staubtest durchführen:

Auf einen Metallzylinder von 500 ccm Inhalt wird ein Metalltrichter mit einem lichten Durchmesser von 10 cm und einem Rohr (lichter Durchmesser 15 mm) gesetzt, dessen unteres Rohrende bis zur 200 ccm-Grenze des Zylinders reicht. Auf der Höhe von 400 ccm des Zylinders wird ein gelochter Papier-Rundfilter (Schleicher und Schüll LS14) befestigt, das mit Wasser derart angefeuchtet ist, dass das Filterpapier nur mässig feucht, aber nicht triefend nass ist. Dann werden 10 g der zu prüfenden Substanz durch den Trichter rasch eingeschüttet, 3 Minuten gewartet, der Trichter herausgenommen und das Papierrundfilter durch Durchschneiden entfernt. Dieses Filterpapier wird dann durch eine 5-stufige Bewertungsskala wie folgt bewertet:

Note 1 = stark stäubend, wenn Papierrundfilter stark getönt bis intensiv gefärbt ist,

Note 2 = erheblich stäubend, wenn Papierrundfilter schwach getönt ist,

Note 3 = mässig stäubend, wenn sich auf dem Papierrundfilter viele Farbflecken, die sich teilweise berühren, befinden;

Note 4 = schwach stäubend, wenn sich auf dem Papierrundfilter Farbstofftupfen, aber keine zusammenhängenden Farbflecke befinden;

Note 5 = staubarm, wenn der Papierrundfilter eine kaum sichtbare Anfärbung oder höchstens vereinzelte Farbstofftupfen aufweist.

Beispiel 1: Eine wässrige dispergierte Zubereitung enthaltend ca. 27% trockenen Rohfarbstoff der Formel

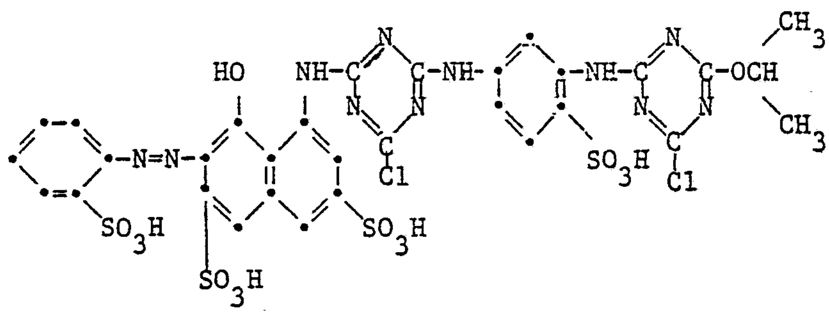

wird unter starkem Rühren mit 7%, bezogen auf den trockenen Rohfarbstoff, des Natriumsalzes eines Naphthalinsulfonsäure-Formaldehyd-Kondensationsproduktes versetzt. Die Suspension wird dann noch mehrere Stunden durch starkes Rühren homogenisiert. Falls notwendig wird dann der pH-Wert der Suspension mit einer 10%igen Natriumhydroxidlösung auf 7 eingestellt. Diese Suspension wird nun in ein Wirbelbett aus Produktpulver gleicher Zusammensetzung wie der Trockenanteil der Suspension unter folgenden Bedingungen eingesprüht:

Zusammensetzung der Zubereitung:

27% Rohfarbstoff
ca. 2% Kondensationsprodukt
ca. 71% Wasser

Lufteintrittstemperatur: 160°C
Ablufttemperatur: 75°C
Wirbelbett-Druckdifferenz $\Delta p$: 90 mm WS ± 5 mm
Strömungsgeschwindigkeit: 0,5 - 3 m/sec.

Als Wirbelbett vorgelegte Menge an pulverförmiger Farbstoffzubereitung: ca. 100 $kg/m^2$.

Die in das Wirbelbett eingedüste Menge an wässriger Farbstoffzubereitung beträgt ca. 500 Liter/h (Leistung).

Noch vorhandener Feinanteil bzw. während des Verlaufs des Verfahrens entstehendes Feinpulver wird im nachgeschalteten Sichter abgeschieden und zur Nachagglomerierung rückgeführt.

Man erhält ein staubarmes, rieselfähiges und formstabiles Farbstoffgranulat mit hohem Schüttgewicht sowie guter Benetzbarkeit und Löslichkeit in Wasser der Zusammensetzung:

| | | | |
|---|---|---|---|
| | 88,5 | % | des obigen Farbstoffes, |
| | 6,5 | % | Naphthalinsulfonsäure-Formaldehyd-Kondensationsprodukt, |
| ca. | 5 | % | Restfeuchte. |

(Beispiele 2 bis 6):

Verfährt man gemäss der Arbeitsweise des vorstehenden Beispiels 1, verwendet jedoch die in den folgenden Beispielen 2 bis 6 genannten Komponenten und Arbeitsbedingungen, so erhält man Granulate der in diesen Beispielen genannten Zusammensetzung, die ähnliche Eigenschaften aufweisen.

Beispiel 2: Farbstoff der in Beispiel 1 angegeben Formel.

Zusammensetzung der Zubereitung:

30 % Rohfarbstoff
3 % Naphthalinsulfonsäure/Formaldehyd-Kondensationsprodukt
2 % Dinatriumphosphat
65 % Wasser

Lufteintrittstemperatur: 180°C
Ablufttemperatur: 75°C
Wirbelbett-Temperaturdifferenz ΔT: 10°C ± 2°C
Wirbelbett-Druckdifferenz Δp: 110 mm WS ± 5 mm

Leistung: ca. 500 Liter wässriger Zubereitung/h

Zusammensetzung des Farbstoffgranulats:

80,6 % Rohfarbstoff
8 % Napthalinsulfonsäure/Formaldehyd-Kondensationsprodukt
5,4 % Dinatriumphosphat
6 % Restfeuchte

Beispiel 3: Farbstoff der Formel

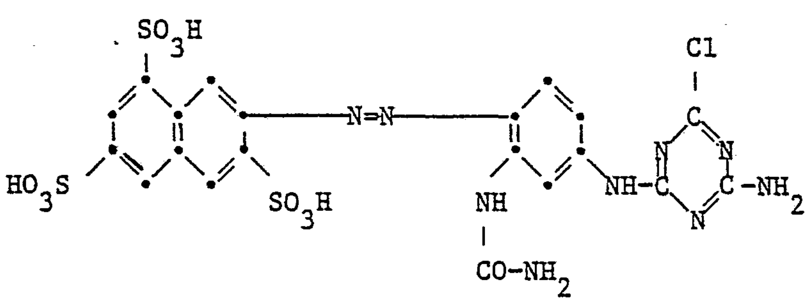

Zusammensetzung der Zubereitung:

23,4 % Rohfarbstoff
6 % Naphthalinsulfonsäure/Formaldehyd-Kondensationsprodukt
1,5 % Gemisch aus Mineralöl und Emulgator
69,6 % Wasser

Lufteintrittstemperatur: 170 °C
Ablufttemperatur: 65 °C

Wirbelbett-Druckdifferenz $\Delta p$: 85 mm WS $\pm$ 5 mm

Leistung: 620 Liter wässriger Zubereitung/h

Zusammensetzung des Farbstoffgranulates:

72,7 % Rohfarbstoff

18,6 % Naphthalinsulfonsäure/Formaldehyd-Kondensationsprodukt

4,7 % Gemisch aus Mineralöl und Emulgator

4 % Restfeuchte

Korngrösseverteilung des Produktes (Granulometrie):

| Anteil (Gew.%) der Teilchen kleiner als (mm) | 0,05 | 0,5 | 1,0 | 2,0 |
|---|---|---|---|---|
| Granulat | 0,9 | 87,1 | 99,1 | 100 |

Beispiel 4: Farbstoff der Formel

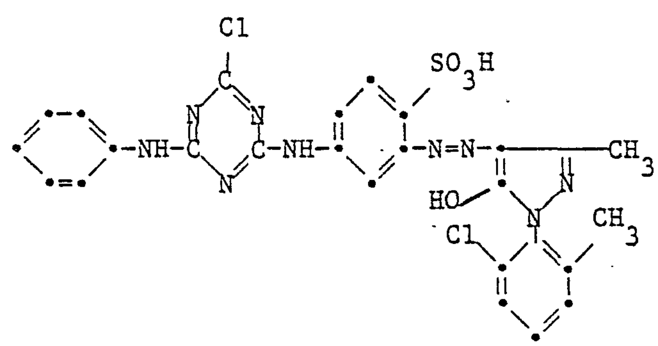

Zusammensetzung der Zubereitung:

ca. 17 % Rohfarbstoff

3 % Naphathalinsulfonsäure/Formaldehyd-Kondensationsprodukt,

1,8 % Kondensationsprodukt aus Oelsäure und 20 Mol Aethylenoxid,

1,4 % Harnstoff,

1 % Dinatriumphosphat,

75,8 % Wasser

Lufteintrittstemperatur: 175°C
Ablufttemperatur: 80°C
Wirbelbett-Druckdifferenz Δp: 110 mm WS ± 5 mm
Leistung: 480 Liter wässriger Zubereitung/h

Zusammensetzung des Farbstoffgranulats:

- 67 % Rohfarbstoff,
- 11,8% Naphthalinsulfonsäure/Formaldehyd-Kondensationsprodukt,
- 7,1% Kondensationsprodukt aus Oelsäure und 20 Mol Aethylenoxid,
- 5,5% Harnstoff,
- 4,1% Dinatriumphosphat,
- 4,5% Restfeuchte.

Beispiel 5: Farbstoff der Formel

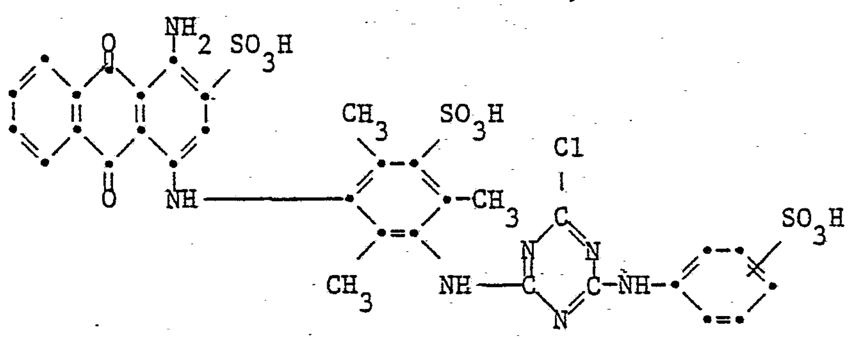

Zusammensetzung der Zubereitung:

ca. 24 % Rohfarbstoff
6 % Naphthalinsulfonsäure/Formaldehyd-Kondensationsprodukt
1,5 % Gemisch aus Mineralöl und Emulgator
68,5 % Wasser

Lufteintrittstemperatur: 160°C
Ablufttemperatur: 75°C
Wirbelbett-Druckdifferenz Δp: 95 mm WS ± 5 mm
Leistung: 680 Liter wässriger Zubereitung/h

Zusammensetzung des Farbstoffgranulats:

71,2 % Rohfarbstoff
17,8 % Naphthalinsulfonsäure/Formaldehyd-Kondensationsprodukt
4,5 % Gemisch aus Mineralöl und Emulgator
6,5 % Restfeuchte

Beispiel 6: Farbstoff der Formel

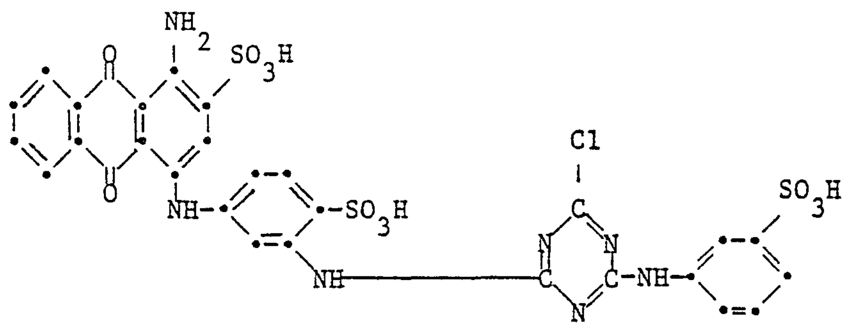

Zusammensetzung der Zubereitung:

ca. 20 % Rohfarbstoff
3,5% Naphthalinsulfonsäure/Formaldehyd-Kondensationsprodukt
76,5% Wasser

Lufteintrittstemperatur: 160°C
Ablufttemperatur: 85°C
Wirbelbett-Temperaturdifferenz ΔT: 10°C ± 2°C
Wirbelbett-Druckdifferenz Δp: 95 mm WS ± 5 mm
Leistung: 520 Liter wässriger Zubereitung/h

Zusammensetzung des Farbstoffgranulates:

82,6 % Rohfarbstoff
14,4 % Naphthalinsulfonsäure/Formaldehyd-Kondensationsprodukt
ca. 3 % Restfeuchte

(Beispiele 7 bis 11):

Verfährt man gemäss der Arbeitsweise des vorstehenden Beispiels 1 unter folgenden Arbeitsbedingungen:

Lufteintrittstemperatur: ca. 155°C

Ablufttemperatur: ca. 70°C

Wirbelbett-Druckdifferenz $\Delta p$: ca. 100 mm WS $\pm$ 5 mm

Leistung: ca. 500 Liter wässriger Zubereitung/h ,

verwendet jedoch die in den folgenden Beispielen 7 bis 11 genannten Komponenten, so erhält man Granulate der in diesen Beispielen genannten Zusammensetzung, die ähnliche Eigenschaften aufweisen.

Beispiel 7: Farbstoff der Formel

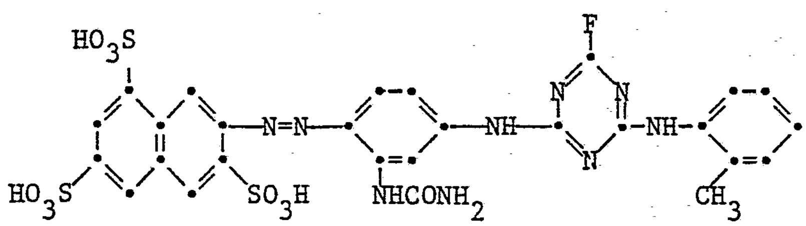

Zusammensetzung der Zubereitung

16,7 % Rohfarbstoff

0,8 % Dinatriumhydrogenphosphat

0,6 % Glaubersalz

1,5 % eines Hilfsmittelgemisches aus dem Addukt von 1 Mol o-Phenylphenol und 8 Mol Aethylenoxid und dem Umsetzungsprodukt aus Kokosfettsäure und 2 Mol Diäthanolamin

80,4 % Wasser

Zusammensetzung des Farbstoffgranulats

79,2 % Rohfarbstoff

4,0 % Dinatriumhydrogenphosphat

2,9 % Glaubersalz

8,9 % des Hilfsmittelgemisches

5,0 % Restfeuchte

Beispiel 8: Farbstoff der im Beispiel 7 angegebenen Formel

Zusammensetzung der Zubereitung

16,7 % Rohfarbstoff
0,8 % Dinatriumhydrogenphosphat
0,6 % Glaubersalz
1,3 % Hilfsmittelgemisch aus dem Umsetzungsprodukt von Kokosfettsäure und 2 Mol Diäthanolamin und Stearinsäurediäthanolamid
80,6 % Wasser

Zusammensetzung des Farbstoffgranulats

80,0 % Rohfarbstoff
4,0 % Dinatriumhydrogenphosphat
3,0 % Glaubersalz
7,9 % Hilfsmittelgemisch
5,1 % Restfeuchte

Beispiel 9: Farbstoff der Formel

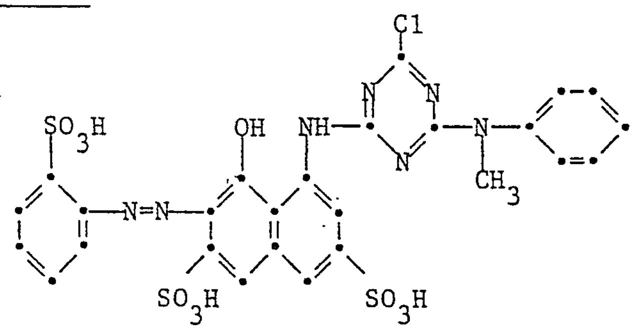

Zusammensetzung der Zubereitung:

19,7 % Rohfarbstoff
0,7 % Glaubersalz
1,7 % Hilfsmittelgemisch aus dem Addukt von 1 Mol o-Phenylphenol und 8 Mol Aethylenoxid und dem Umsetzungsprodukt von Kokosfettsäure und 2 Mol Diäthanolamin
77,9 % Wasser

Zusammensetzung des Farbstoffgranulats

84,8 % Rohfarbstoff
3,0 % Glaubersalz
7,1 % Hilfsmittelgemisch
5,1 % Restfeuchte

Beispiel 10: Farbstoff der im Beispiel 9 angegebenen Formel

Zusammensetzung der Zubereitung

19,7 % Rohfarbstoff
0,7 % Glaubersalz
1,4 % Hilfsmittelgemisch aus dem Umsetzungsprodukt von Kokosfettsäure und 2 Mol Diäthanolamin und Stearinsäurediäthanolamid
78,2 % Wasser

Zusammensetzung des Farbstoffgranulats

85,7 % Rohfarbstoff
3,2 % Glaubersalz
6,1 % Hilfsmittelgemisch
5,0 % Restfeuchte

Beispiel 11: Farbstoff der im Beispiel 9 angegebenen Formel

Zusammensetzung der Zubereitung

19,7 % Rohfarbstoff
0,7 % Glaubersalz
1,7 % Hilfsmittelgemisch aus dem Addukt von 2-Aethylhexanol mit 5 Mol Aethylenoxid und dem Kondensationsprodukt aus 1 Mol Kokosfettsäure und 2 Mol Diäthanolamin
77,9 % Wasser

Zusammensetzung des Farbstoffgranulats

84,9 % Rohfarbstoff
3,2 % Glaubersalz
7,1 % Hilfsmittelgemisch
4,8 % Restfeuchte

Patentansprüche

1. Verfahren zur Herstellung von Granulaten von wasserlöslichen faserreaktiven Farbstoffen, dadurch gekennzeichnet, dass man eine wässrige Zubereitung, enthaltend

A) mindestens einen, eine wasserlöslichmachende Gruppe enthaltenden, faserreaktiven Farbstoff, der als Reaktivrest mindestens eine heterocyclische Gruppe besitzt, die mindestens ein abspaltbares Halogenatom aufweist,

B) mindestens ein Tensid und gegebenenfalls weitere Zusätze auf ein Wirbelbett, enthaltend mindestens eine der Komponenten A, B oder der weiteren Zusätze sprüht.

2. Verfahren nach Anspruch 1, dadurch gekennzeichnet, dass man als Tensid ein nichtionogenes und/oder anionisches Tensid verwendet.

3. Verfahren nach den Ansprüchen 1 und 2, dadurch gekennzeichnet, dass man ein anionisches Tensid verwendet.

4. Verfahren nach den Ansprüchen 1 bis 3, dadurch gekennzeichnet, dass man als weitere Zusätze mindestens ein Hilfsmittel mit verstärkter Hydrotropiewirkung, Dextrin, Staubbindemittel, anorganisches und/oder organisches Salz verwendet.

5. Verfahren nach den Ansprüchen 1 bis 4, dadurch gekennzeichnet, dass man als Farbstoff einen solchen der Formel I

$$D - Z_n \qquad (I)$$

verwendet, worin D den Rest eines metallfreien oder metallhaltigen Azo-, Anthrachinon- oder Phthalocyaninfarbstoffes, der eine oder mehrere wasserlöslichmachende Gruppen aufweist,

Z eine Diazinyl- bzw. Triazinylgruppe, die mindestens ein abspaltbares Halogenatom aufweist, und über eine Aminogruppe an D gebunden ist, und

n 1 oder 2 bedeuten.

6. Verfahren nach Anspruch 5, dadurch gekennzeichnet, dass man als Farbstoff einen solchen der Formel Ia

$$D - Z'_n \qquad (Ia)$$

verwendet, worin D die im Anspruch 5 angegebene Bedeutung hat und Z' eine Gruppe der Formel

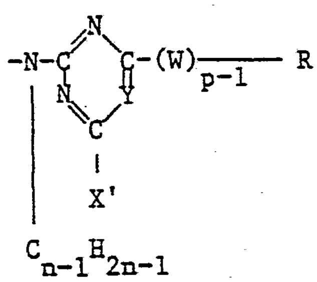

bedeutet, worin

W $-N-$
$C_{(q-1)}H_{(2q-1)}$

X' Halogen, vorzugsweise Cl oder F,

Y =N-, =CH- oder =CX'-,

n 1 oder 2, vorzugsweise 1,

p 1 oder 2, und

q 1 bis 3 darstellen,

wobei

wenn p 2 ist, R gegebenenfalls substituiertes Niederalkyl, Phenyl oder Naphthyl ist, und wenn p 1 ist, R Halogen, Niederalkoxy oder Alkoxyalkoxy, gegebenenfalls substituiertes Phenoxy oder $-NH_2$ sein kann.

7. Verfahren nach den Ansprüchen 1 bis 6, dadurch gekennzeichnet, dass man als anionisches Tensid ein Kondensationsprodukt auf der Basis von Phenol-, Kresol- oder Naphthol- bzw. Naphthalinsulfonsäure und Formaldehyd, oder ein Ligninsulfonat (Sulfit-Celluloseablauge) oder ein Oxyligninsulfonat verwendet.

8. Verfahren nach Anspruch 6, dadurch gekennzeichnet, dass man als anionisches Tensid ein Kondensationsprodukt auf der Basis von Naphthalinsulfonsäure und Formaldehyd verwendet.

9. Verfahren nach Ansprüchen 1 und 2, dadurch gekennzeichnet, dass man als nichtionogenes Tensid ein Kondensationsprodukt aus einer aliphatischen Fettsäure und 10 bis 30 Mol Aethylenoxid, vorzugsweise aus Oelsäure und 20 Mol Aethylenoxid, verwendet.

10. Verfahren nach Anspruch 4, dadurch gekennzeichnet, dass man als Staubbindemittel ein Gemisch aus Mineralöl bzw. Mineralölsulfonsäure und einem Emulgator oder aus Paraffinöl und einem nichtionischen Emulgator verwendet.

11. Verfahren nach Anspruch 4, dadurch gekennzeichnet, dass man als anorganisches Salz Natriumchlorid, Natriumsulfat, Natriumhydrogensulfat, Natriumcarbonat, Natriumhydrogencarbonat, Mono-, Di- oder Trinatriumphosphat, Natriumtripolyphosphat, Polyphosphate oder Lithiumchlorid und als organisches Salz Natriumacetat verwendet.

12. Verfahren nach den Ansprüchen 1 bis 4, dadurch gekennzeichnet, dass die Summe der Komponenten B und der weiteren Zusätze 3 bis 50 Gew.%, bezogen auf das Granulat, beträgt.

13. Verfahren nach den Ansprüchen 1 bis 12, dadurch gekennzeichnet, dass 1 bis 30 Gew.% anionisches Tensid, bezogen auf das Granulat zugegeben wird.

14. Verfahren nach den Ansprüchen 1 bis 13, dadurch gekennzeichnet, dass die weiteren Zusätze in Gesamtmengen von 1 bis 45 Gew.%, bezogen auf das Granulat zugegeben werden.

15. Verfahren nach Anspruch 1, dadurch gekennzeichnet, dass man gleichzeitig mit der wässrigen Farbstoffzubereitung pulverförmige Zusätze in das Wirbelbett sprüht.

16. Verfahren nach Anspruch 1, dadurch gekennzeichnet, dass das Wirbelbett durch einen Gasstrom erzeugt wird, der eine Eingangstemperatur von 35 bis 300° C aufweist.

17. Verfahren nach Anspruch 1, dadurch gekennzeichnet, dass die Temperatur im Wirbelbett 50 bis 100° C beträgt.

18. Verfahren nach Anspruch 1, dadurch gekennzeichnet, dass man das Verfahren kontinuierlich durchführt und die formulierten Farbstoffteilchen, die einen Durchmesser grösser als 5 mm und kleiner als 0,1 mm aufweisen, gegebenenfalls nach Zerkleinerung der Grobanteile direkt in die wässrige Zubereitung und/oder in das Wirbelbett zurückführt.

19. Die nach dem Verfahren gemäss den Ansprüchen 1 bis 18 erhaltenen Granulate von wasserlöslichen, faserreaktiven Farbstoffen.

20. Granulate, gemäss Anspruch 19, enthaltend 40 bis 95 Gew.%, vorzugsweise 65 bis 95 Gew.% mindestens eines, eine wasserlöslichmachende Gruppe enthaltenden, faserreaktiven Farbstoffes, der als Reaktivrest mindestens eine heterocyclische Gruppe besitzt, die mindestens ein abspaltbares Halogenatom aufweist; 1 bis 30 Gew.% eines anionischen Tensides und gegebenenfalls 1 bis 45 Gew.% weitere Zusätze sowie Restfeuchte.

0024654

Europäisches Patentamt

# EUROPÄISCHER RECHERCHENBERICHT

Nummer der Anmeldung

EP 80 10 4862

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 254 730 (VYZKUMNY USTAV PARDUBICE)<br>* Seite 2, Zeilen 46-111; Beispiele 1-3 *<br>-- | 1-8 |
| | FR - A - 2 387 270 (HOECHST)<br>* Seite 1, Zeile 26 bis Seite 2, Zeile 1 * | 1 |
| D | & DE - A - 2 716 478<br>-- | |
| A | FR - A - 2 388 028 (ICI) | |
| A | FR - A - 2 212 401 (BASF) | |
| A | FR - A - 2 169 242 (ICI) | |
| A | FR - A - 2 373 593 (CIBA-GEIGY) | |
| DA | DE - A - 2 802 327 (CIBA-GEIGY) | |
| DA | DE - A - 2 231 445 (CIBA-GEIGY) | |
| PA | RESEARCH DISCLOSURE, Nr. 188, 1979, Seiten 671-672, Industrial Opportunities Ltd., Vant Hants Pogler, GB<br>---- | |

**KLASSIFIKATION DER ANMELDUNG (Int Cl.³)**

C 09 B 67/24
67/42

**RECHERCHIERTE SACHGEBIETE (Int Cl.³)**

C 09 B 67/24
67/06
67/42

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Den Haag | 08-12-1980 | DAUKSCH |

EPA form 1503.1 06.78

BAD ORIGINAL